# EUROPÄISCHE PATENTANMELDUNG

(11) **EP 4 293 260 A1**
(43) Veröffentlichungstag der Anmeldung: **20.12.2023**
(21) Anmeldenummer: 22179550.3
(22) Anmeldetag: 17.06.2022
(51) Int. Cl.: F16K 31/122, B29C 49/06, B29C 49/42, B29C 49/78, F16K 37/00, G01D 5/14

(54) **VENTIL**

(71) Anmelder: Eugen Seitz AG, 8623 Wetzikon (CH)
(72) Erfinder: KEEL, Manual, 5103 Wildegg (CH); ERNI, Marco, 5632 Buttwil (CH)
(74) Vertreter: Clerc, Natalia

(57) **Zusammenfassung**

Eine Ventileinheit weist ein Ventil mit einem bewegbaren Kolben (20) zum Schliessen und Öffnen des Ventils auf. Die Ventileinheit weist ferner einen Magneten (5) oder ein magnetisierbares Element (50) und eine Sensoreinheit (4) auf, die einen Magnetfeldsensor, vorzugsweise einen Hall-Sensor (41), zur Bestimmung einer Position des Kolbens (20) aufweist. Der Magnet (5) oder das magnetisierbare Element (50) und die Sensoreinheit (4) sind durch die Bewegung des Kolbens (20) relativ zueinander bewegbar. Die Sensoreinheit (4) ist in einer Aufnahmeöffnung (111) der Ventileinheit angeordnet, die gegenüber einem Raum, in den der Kolben (20) während seiner Bewegung eindringt, geschlossen ausgebildet ist. Die Ventileinheit ermöglicht eine genaue Überwachung des Kolbens und somit eine frühzeitige Erkennung einer Alterung.

## Beschreibung

### TECHNISCHES GEBIET

Die vorliegende Erfindung betrifft ein Ventil, insbesondere zum pneumatischen Schalten in einem Blasformprozess. Das Ventil eignet sich insbesondere zur Verwendung in einer Extrusionsblas- oder einer Streckblasmaschine zur Fertigung von Hohlkörpern aus Kunststoff.

### STAND DER TECHNIK

Blaseinrichtungen bzw. Blasmaschinen dienen der Formung von Hohlkörpern, insbesondere zur Herstellung von Kunststoff-Flaschen aus PP (Polypropylen) oder PET (Polyethylenterephthalat). Üblicherweise wird ein vortemperierter Vorformling mit einer Blasdüse der Blasmaschine verbunden. Durch Einblasen eines Prozessgases, vorzugsweise Druckluft, wird er geweitet. Durch Verwendung von Blasformen lässt sich die gewünschte Form erzielen.

Die Herstellung bzw. Formung derartiger Hohlkörper mittels Blasmaschinen erfolgt innerhalb weniger Sekunden, vorzugsweise innerhalb von 1 bis 3 s, wobei das Einblasen des Prozessgases über zwei oder mehrere Stufen erfolgt. Die einzelnen Blasschritte wie auch das Entlüften werden mittels Ventilen gesteuert. An diese Ventile werden deshalb hohe Anforderungen gesetzt. So müssen sie möglichst präzise und schnell schalten können und auch ihre Ansprechzeiten müssen möglichst kurz sein. Es werden üblicherweise Prozessventile verwendet, die ein pneumatisch betätigtes Hauptventil und mindestens ein zugehöriges Pilotventil zur Steuerung des Hauptventils aufweisen. Das Hauptventil weist vorzugsweise einen bezüglich des Prozessgases druckausgeglichenen Kolben auf, der lediglich mittels der über das mindestens eine Pilotventil angelegten Steuerdrücke betätigt wird.

EP 1 574 771 A2, EP 2 142 830 B1, EP 3 530 431 A1 sowie WO 2019/105783 A1 offenbaren derartige mittels Pilotventilen vorgesteuerte Hauptventile.

Prozessventile sind hohen Belastungen ausgesetzt und unterliegen einem Alterungsprozess. Sie müssen deshalb regelmässig ersetzt werden, um ein stets optimales Schaltverhalten der Blasmaschine zu gewährleisten.

Des Weiteren weist der Zeitpunkt des Schaltens des Kolbens einen Unschärfebereich auf. Es ist nicht exakt bekannt, wann der Kolben schaltet. Dies führt dazu, dass im Blasprozess zusätzliche Reserven vorgesehen werden. Es werden beispielsweise Pausen zwischen Ventilöffnungsphasen eingebaut.

Ferner werden Hohlkörper, insbesondere Flaschen, vermehrt mit relativ dünnen Wänden und/oder mit einem Anteil an Recycling-PET hergestellt. Recycling-PET weist eine Material-Inhomogenität auf, die sensitiv auf Abweichungen vom Ideal-Blasprozess reagiert. Auch dünne Wände stellen höhere Anforderungen an die Wiederholbarkeit des Blasprozesses, damit einzelne Flaschen nicht platzen.

Ventile müssen deshalb frühzeitig ausgewechselt werden, d.h. bevor sich ihre Qualität im Schaltverhalten verringert. Die zu berücksichtigenden Reserven und Toleranzen führen dazu, dass der Blasprozess weder zeitlich noch bezüglich des verwendeten Prozessdrucks vollständig optimiert werden kann. Das Ergebnis dieser Einschränkungen ist somit, dass der Herstellungsprozess kostenmässig noch nicht vollständig optimiert ist.

DE 37 30 940 A1 offenbart ein vorgesteuertes Wege-Ventil mit einem bewegbaren Kolben, dessen Position mittels eines Hall-Sensors gemessen wird. Im Kolben ist mittig ein Permanentmagnet angeordnet. Der Hall-Sensor befindet sich ortsfest in einer Zwischenplatte zwischen einer Vorsteuerung und einem Ventilgehäuse. Die Zwischenplatte benötigt Platz und erschwert das Auswechseln des Ventils.

In DE 44 17 464 A1 ist ein Ventil gezeigt mit einem durch ein Pilotteil betätigtes Spulenglied und einem Hall-Sensor, der die Bewegungstendenz des Spulenglieds erfasst um festzustellen, ob das Spulenglied nicht festhaftet.

CN 103148222 A beschreibt ein hydraulisches Steuerventil mit einem elektromagnetischen Pilotventil und einem Hall-Sensor.

Die Überwachung eines in Blasprozessen eingesetzten vorgesteuerten pneumatischen Ventils ist komplex, nicht zuletzt durch das minimierte Platzangebot und die regulatorischen Bestimmungen bei der Herstellung von Hohlkörpern im Lebensmittelbereich, beispielsweise von PET-Getränkeflaschen.

### DARSTELLUNG DER ERFINDUNG

Es ist deshalb eine Aufgabe der Erfindung, ein Ventil, insbesondere zum pneumatischen Schalten in einem Blasformprozess, zu schaffen, dessen Schaltverhalten überwacht und das trotzdem auf einfache Art und Weise ausgewechselt werden kann.

Diese Aufgabe löst ein Ventil mit den Merkmalen des Patentanspruchs 1.

Die erfindungsgemässe Ventileinheit weist
- ein Ventil, das einen bewegbaren Kolben zum Schliessen und Öffnen des Ventils aufweist,
- einen Magnet oder ein magnetisierbares Element und
- eine Sensoreinheit mit einem Magnetfeldsensor zur Bestimmung einer Position des Kolbens
auf. Der Magnet oder das magnetisierbare Element und die Sensoreinheit sind durch die Bewegung des Kolbens relativ zueinander bewegbar. Die Sensoreinheit ist in einer Aufnahmeöffnung der Ventileinheit angeordnet, die gegenüber einem Raum, in den der Kolben während seiner Bewegung eindringt, geschlossen ausgebildet ist.

Dank der Anordnung der Sensoreinheit in einer zum Kolben hin geschlossenen Aufnahmeöffnung erübrigt sich eine spezielle Abdichtung von Druckraum und Messanordnung. Des Weiteren ist die Montage der Sensoreinheit in die Aufnahmeöffnung relativ einfach. Die Verwendung eines Magnetfeldsensors, insbesondere eines Hall-Sensors, ermöglicht zudem eine relativ genaue Messung der Kolbenposition.

Der Magnetfeldsensor ist vorzugweise ein Hall-Sensor, ein magneto-resistiver Sensor oder ein anderer Magnetfeldsensor mit ähnlich geringen Abmessungen wie die zwei erstgenannten Sensoren. Vorzugsweise ist der Magnetfeldsensor ein Hall-Sensor.

In bevorzugten Ausführungsformen ist die Aufnahmeöffnung als Sackbohrung ausgebildet, so dass das Bauteil mit der Aufnahmeöffnung selber eine Wand zwischen der Sensoreinheit und dem Kolben ausbildet. In anderen Ausführungsformen ist die Aufnahmeöffnung als Durchgangsbohrung ausgebildet, wobei die zum Kolben hingewandte Öffnung mit geeigneten Mitteln verschlossen ist, beispielsweise mittels eines Stopfens oder einer Gussmasse.

Ist der Raum zwischen Sensoreinheit und Kolben dem Prozessfluid einer Blasformvorrichtung zugänglich, so ist das entsprechende Bauteil vorzugsweise einteilig ausgebildet und bildet die trennende Wand zwischen Sensoreinheit und Kolben aus. Dadurch ist sichergestellt, dass das Prozessfluid, üblicherweise Druckluft, nicht verunreinigt werden kann, so dass für die Herstellung von Getränkeflaschen geltende Regelungen erfüllt sind.

In bevorzugten Ausführungsformen ist der Magnet ein Permanentmagnet. Der Permanentmagnet ist vorzugsweise aus einem hartmagnetischen Material gefertigt. In anderen Ausführungsformen ist der Magnet ein Elektromagnet.

Das magnetisierbare Element ist vorzugsweise aus einem weichmagnetischen Werkstoff gefertigt und noch bevorzugter aus einem magnetisch leitenden Material mit geringer Remanenz und noch bevorzugter aus einem magnetisch leitenden Material mit sehr geringer Remanenz.

Vorzugsweise ist der Magnet oder das magnetisierbare Element im Kolben angeordnet und die Sensoreinheit ist ortsfest angeordnet. Dies erleichtert die Montage der Sensoreinheit und ermöglicht eine Kabelverbindung von der Sensoreinheit zu einer Steuervorrichtung. Des Weiteren lässt sich der Kolben kostengünstig herstellen.

Ist im Kolben das magnetisierbare Element angeordnet, so ist ein zugehöriger Magnet, insbesondere ein Permanentmagnet oder ein Elektromagnet, vorzugsweise ortsfest angeordnet, vorzugsweise benachbart zur Sensoreinheit.

Vorzugsweise ist die Sensoreinheit in einem Gehäuseteil der Ventileinheit angeordnet, wobei die Aufnahmeöffnung zwecks Einführung der Sensoreinheit zu einer Aussenseite hin offen ausgebildet ist. Dies erleichtert die Montage und ein Auswechseln der Sensoreinheit. Vorteilhaft ist ferner, dass die Sensoreinheit im bestehenden Gehäuse der Ventileinheit ist.

Dies ist insbesondere bei Blasformvorrichtungen mit ihren Ventilblöcken vorteilhaft, da der zur Verfügung stehende Platz ohnehin gering ist und deshalb jedes zusätzliche Bauteil möglichst vermieden wird.

In bevorzugten Ausführungsformen sind der Magnetfeldsensor, insbesondere der Hall-Sensor, und der Magnet oder das magnetisierbare Element entlang einer gemeinsamen Achse beabstandet zueinander angeordnet, wobei sich die gemeinsame Achse entlang der Bewegungsrichtung des Kolbens beim Öffnen und Schliessen des Ventils erstreckt. Dies erleichtert das Ausrichten der Sensoreinheit und des zugehörigen Magneten oder des zugehörigen magnetisierbaren Elements zueinander. Des Weiteren sind die Messung und die Auswertung der Daten erleichtert.

Vorzugsweise weist die Aufnahmeöffnung eine Längsrichtung auf, die sich entlang der gemeinsamen Achse erstreckt. Dadurch lässt sich die Sensoreinheit platzsparend in der Ventileinheit anordnen. Die Gesamtgrösse der Ventileinheit kann dadurch unverändert bleiben.

Der Magnet lässt sich relativ klein ausbilden, insbesondere bei einer Anordnung der Sensoreinheit und des Magneten entlang einer gemeinsamen Achse. Dadurch ist der Platzbedarf minimiert und die Ventileinheit wird durch die Messvorrichtung nicht vergrössert. In anderen Ausführungsformen besteht der Magnet bzw. das magnetisierbare Element aus mehreren Teilen. Beispielsweise lassen sich zwei Magnete nebeneinander anordnen.

Der Magnet ist vorzugsweise in Form eines flachen Stabmagnets oder eines Ringmagnets ausgebildet. Vorzugsweise ist der Stabmagnet mittig und entlang einer Diagonalen in einem zylinderförmigen Grundkörper des Kolbens angeordnet, wobei er vorzugsweise senkrecht zur Bewegungsrichtung des Kolbens verläuft. Der Ringmagnet ist vorzugsweise zentrisch im Kolben angeordnet. Vorzugsweise ist der Magnet derart angeordnet, dass die Magnetfeldlinien die Bewegungsrichtung des Kolbens senkrecht kreuzen.

Das magnetisierbare Element ist vorzugsweise aus einem ferromagnetischen Material gefertigt. Wird ein magnetisierbares Element verwendet, ist vorzugsweise ferner ein Magnet vorhanden, vorzugsweise in Form eines Permanentmagneten oder eines Elektromagneten. Dieser Magnet ist vorzugsweise ortsfest bezüglich der Sensoreinheit angeordnet. Dadurch lässt sich der Kolben, der ein Verbrauchsmaterial ist und regelmässig ausgewechselt werden muss, kostengünstig herstellen. Der Permanentmagnet bzw. der Elektromagnet sowie die Sensoreinheit lassen sich somit länger verwenden als der Kolben.

Der Magnetfeldsensor, insbesondere der Hall-Sensor, kann ein eindimensionaler (1D) Sensor sein. Eine genaue Messung mit einem 1D-Sensor bedingt jedoch eine relativ genaue Positionierung der Sensoreinheit und des zugehörigen Magneten oder des zugehörigen magnetisierbaren Elements. Des Weiteren sollte sich der Kolben beim Öffnen und Schliessen nicht drehen.

Vorzugsweise ist der Magnetfeldsensor, insbesondere der Hall-Sensor, deshalb ein zweidimensionaler (2D) Sensor, noch bevorzugter ein dreidimensionaler (3D) Sensor. Auf diese Weise lässt sich eine Drehung des Kolbens erkennen und Abweichungen in der Positionierung der Sensoreinheit lassen sich erkennen. Mit Hilfe des 3D Sensors lassen sich ein magnetischer Vektor und dessen Betrag bestimmen.

Vorzugsweise weist die Ventileinheit eine Steuervorrichtung auf, welche Positionen des Kolbens kontinuierlich auswertet, wobei die Steuervorrichtung ausgebildet ist, um zusätzlich zu einem geschlossenen und einem offenen Zustand des Ventils weitere Positionen während einer Bewegung des Kolbens auszuwerten. Auf diese Weise lässt sich der Bewegungsverlauf des Kolbens auswerten, beispielsweise lässt sich feststellen, ob das Ventil schnell genug schliesst. Abnützungen des Ventils, insbesondere des Kolbens, lassen sich frühzeitig erkennen.

In bevorzugten Ausführungsformen ist der Kolben lösbar und relativ zum Gehäuseteil beweglich am Gehäuseteil befestigt, wodurch das Gehäuseteil mit dem Kolben und der Sensoreinheit gemeinsam auswechselbar sind. Dies erleichtert die Wartung der Vorrichtung, insbesondere der Blasformvorrichtung.

Vorzugsweise ist die Sensoreinheit gehäuselos in der Aufnahmeöffnung angeordnet, wobei das Gehäuseteil die Sensoreinheit schützend umgibt. Dadurch ist der Platzbedarf der Sensoreinheit minimiert, was insbesondere bei den beengten Verhältnissen eines Ventilkopfes einer Blasformvorrichtung vorteilhaft ist. Zudem sind die Herstellungskosten reduziert.

In bevorzugten Ausführungsformen weist die Sensoreinheit eine längliche Form auf, wobei der Magnetfeldsensor, insbesondere der Hall-Sensor, in einem Endbereich angeordnet ist.

Der Magnetfeldsensor lässt sich somit nahe an den Magneten oder nahe an das magnetisierbare Element bringen, so dass an die gegenseitige Positionierung der zwei Messelemente geringere Anforderungen gestellt werden können.

Vorzugsweise weist die Sensoreinheit eine längliche Grundplatte auf, wobei in einem Endbereich der Grundplatte der Magnetfeldsensor, insbesondere der Hall-Sensor, angeordnet ist und wobei die Grundplatte in der Aufnahmeöffnung aufgenommen ist. Vorzugsweise verläuft die Grundplatte entlang der gemeinsamen Achse.

Vorzugsweise ist die Sensoreinheit auswechselbar in der Aufnahmeöffnung bzw. im Gehäuseteil gehalten.

Vorzugsweise ist an einem dem Endbereich gegenüberliegenden Ende ein Stecker fest mit der Grundplatte verbunden, wobei der Stecker im montierten Zustand der Grundplatte in der Aufnahmeöffnung von aussen zugänglich ist. Dies erleichtert die Montage und das Auswechseln der Sensoreinheit. Zudem ist eine Kabelverbindung mit einer Steuervorrichtung vereinfacht.

In bevorzugten Ausführungsformen ist die Sensoreinheit in ihrem dem Kolben zugewandten Endbereich gelagert. Vorzugsweise ist hierzu ein O-Ring vorhanden. In anderen Ausführungsformen ist die Form der Sensoreinheit derart, dass sich eine Lagerung erübrigt.

Vorzugsweise weist der Kolben einen kreiszylinderförmigen Grundkörper auf, der eine Längsmittelachse definiert, wobei die gemeinsame Achse die Längsmittelachse des Kolbens ist und wobei der Magnetfeldsensor, insbesondere der Hall-Sensor, und der Magnet oder das magnetisierbare Element zentrisch zur Längsmittelachse angeordnet sind. Dies erleichtert die Messung, insbesondere, wenn sich der Kolben beim Öffnen und Schliessen des Ventils drehen kann.

Je nach Ausführungsform des Kolbens und seiner Kolbenaufnahme ist der Kolben gegenüber dem Gehäuseteil drehfest oder drehbar. Ist er drehbar, so ist der Magnetfeldsensor, insbesondere der Hallsensor, und/oder der Magnet vorzugsweise zentrisch zur Drehachse des Kolbens angeordnet, wobei die Drehachse vorzugsweise die Längsmittelachse ist. Vorzugsweise sind der Magnetfeldsensor und der Magnet zentrisch zur Drehachse bzw. zur Längsmittelachse angeordnet. Gleiches gilt, wenn anstelle eines Magneten ein magnetisierbares Element im Kolben angeordnet ist.

Vorzugsweise ist die gesamte Sensoreinheit zentrisch zur Längsmittelachse angeordnet. Vorzugsweise verläuft die länglich ausgebildete Sensoreinheit in ihrer Längsausdehnung entlang der gemeinsamen Achse und noch bevorzugter entlang der Längsmittelachse.

In anderen Ausführungsformen ist der Magnet und/oder der Magnetfeldsensor azentrisch angeordnet, um mehr Informationen bezüglich der Drehung des Kolbens zu erhalten. Dies ist insbesondere bei Verwendung eines 3D (dreidimensionalen) Magnetfeldsensors, insbesondere eines 3D Hall-Sensors, der Fall.

Die Ventileinheit und insbesondere der Kolben können unterschiedlich gestaltet sein. Insbesondere können sie die Form bekannter Ventileinheiten und Kolben aufweisen. In einer bevorzugten Ausführungsform weist das Gehäuseteil einen Führungszapfen auf, welcher in eine Ausnehmung des Kolbens ragt und wobei der Magnetfeldsensor, insbesondere der Hall-Sensor, im Führungszapfen angeordnet ist. Dadurch ist der Kolben im Bereich des Magnetfeldsensors und des Magneten bzw. des magnetisierbaren Elements optimal geführt. Dies erleichtert die Messung.

Die Erfindung umfasst ferner eine Ventileinheit
- mit einem Ventil, das einen bewegbaren Kolben zum Schliessen und Öffnen des Ventils aufweist,
   - mit einem Magneten oder einem magnetisierbaren Element und
   - mit einer Sensoreinheit, die einen Magnetfeldsensor, vorzugsweise einen Hall-Sensor, zur Bestimmung einer Position des Kolbens aufweist,
wobei der Magnet oder das magnetisierbare Element und die Sensoreinheit durch die Bewegung des Kolbens relativ zueinander bewegbar sind. Die Sensoreinheit ist gehäuselos in einer Aufnahmeöffnung der Ventileinheit angeordnet, wobei die Aufnahmeöffnung die Sensoreinheit schützend umgibt.

Diese Ventileinheit lässt sich äusserst platzsparend ausbilden. Zudem lässt sich der Magnetfeldsensor, insbesondere der Hall-Sensor, dadurch in nächste Nähe zum Magneten bzw. zum magnetisierbaren Element bringen, wodurch ein starkes Messsignal erhalten wird.

Die Erfindung umfasst zudem eine Ventileinheit
- mit einem Ventil, das einen bewegbaren Kolben zum Schliessen und Öffnen des Ventils aufweist,
- mit einem Magneten oder einem magnetisierbaren Element und
- mit einer Sensoreinheit, die einen Magnetfeldsensor, vorzugsweise einen Hall-Sensor, zur Bestimmung einer Position des Kolbens aufweist,
wobei der Magnet oder das magnetisierbare Element und die Sensoreinheit durch die Bewegung des Kolbens relativ zueinander bewegbar sind. Der Magnetfeldsensor, ist ein 3D Sensor mit lateralen und vertikalen Sensor-Elementen zur Messung eines dreidimensionalen Vektors einer magnetischen Flussdichte.

Diese Ventileinheit ermöglicht eine genaue Messung auch bei rotierendem Kolben bzw. bei einer nicht genau axialen Ausrichtung des Magnetfeldsensors, insbesondere des Hall-Sensors, und des Magneten bzw. des magnetisierbaren Elements. Ferner lassen sich mehr Informationen zum Verhalten des Kolbens beim Öffnen und Schliessen erhalten.

Die Erfindung betrifft auch eine Ventileinheit
- mit einem Ventil, das einen bewegbaren Kolben zum Schliessen und Öffnen des Ventils aufweist,
- mit einem Magneten oder einem magnetisierbaren Element und
- mit einer Sensoreinheit, die einen Magnetfeldsensor, vorzugsweise einen Hall-Sensor, zur Bestimmung einer Position des Kolbens aufweist,
wobei der Magnet oder das magnetisierbare Element und die Sensoreinheit durch die Bewegung des Kolbens relativ zueinander bewegbar sind. Die Ventileinheit weist eine Steuervorrichtung auf, welche Positionen des Kolbens kontinuierlich auswertet, wobei die Steuervorrichtung ausgebildet ist, um zusätzlich zu einem geschlossenen und einem offenen Zustand des Ventils weitere Positionen während einer Bewegung des Kolbens auszuwerten.

Diese Ventileinheit ermöglicht das Verhalten des Kolbens während des gesamten Schliess- und Öffnungsvorgangs zu beobachten. Abnützungen können schneller erkannt werden und der optimale Zeitpunkt zum Auswechseln des Kolbens bzw. des gesamten Ventils lassen sich besser bestimmen.

Diese drei oben genannten Ventileinheiten lassen sich mit den weiter oben im Text genannten bevorzugten Ausführungsformen beliebig kombinieren, ohne dass das Merkmal bezüglich der geschlossenen Aufnahmeöffnung ebenfalls vorhanden sein muss. Vorzugsweise lassen sich alle beschriebenen Ventileinheiten mit einem Teach-In-Verfahren kalibrieren. Abweichungen in der Einbaulage der Sensoreinheit oder des Kolbens lassen sich werkseitig festhalten und auf der Sensoreinheit in einem Speicher speichern. Im Gebrauch werden sie der Steuervorrichtung übermittelt. Dadurch lassen sich Korrekturdaten erstellen und bei der Auswertung der realen Messwerte berücksichtigen. Fehler, die während des Gebrauchs des Ventils festgestellt werden, werden vorzugsweise ebenfalls im Speicher der Sensoreinheit oder in der Steuervorrichtung gespeichert und bei weiteren Messungen berücksichtigt.

Weitere Ausführungsformen sind in den abhängigen Patentansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Figur 1: eine schematische Darstellung eines Gehäuseblocks mit erfindungsgemässen Prozessventilen einer Blasformmaschine;
- Figur 2: einen Querschnitt durch ein erfindungsgemässes Ventil im offenen Zustand gemäss einer ersten Ausführungsform;
- Figur 3: das Ventil gemäss Figur 2 im geschlossenen Zustand;
- Figur 4: eine Ansicht auf eine erfindungsgemässe Sensoreinheit in einer ersten Ausführungsform;
- Figur 5: die Sensoreinheit gemäss Figur 4 in einer perspektivischen Darstellung;
- Figur 6: eine Ansicht auf eine erfindungsgemässe Sensoreinheit in einer zweiten Ausführungsform;
- Figur 7: die Sensoreinheit gemäss Figur 6 in einer perspektivischen Darstellung;
- Figur 8: eine Darstellung eines Teils des Ventils gemäss Figur 3 mit Darstellung von Druckausgleichsleitungen und einer Steuerdruckleitung sowie mit Darstellung der Magnetfeldlinien und
- Figur 9: einen Querschnitt durch ein erfindungsgemässes Ventil im geschlossenen Zustand gemäss einer zweiten Ausführungsform.

### BESCHREIBUNG BEVORZUGTER AUSFÜHRUNGSFORMEN

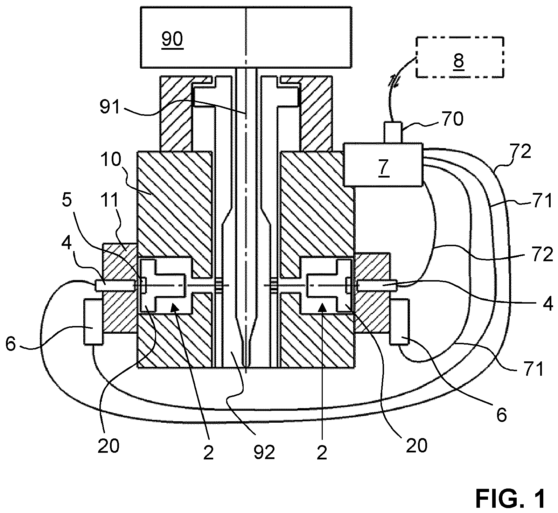

Figur 1 zeigt einen bevorzugten Anwendungsbereich der erfindungsgemässen Ventileinheit. Es handelt sich um einen Gehäuseblock einer Blasformmaschine. Der Gehäuseblock bildet bezüglich den Ventileinheiten ein erstes Gehäuseteil 10 aus. Das Gehäuseteil 10 weist eine Durchgangsbohrung 92 auf, die von einem Streckdorn 91 durchsetzt ist, der mit einer Streckdornvorrichtung 90 verbunden ist. Ein Rohling eines aufzublasenden Körpers, insbesondere einer PET-Flasche, lässt sich an oder in der Durchgangsbohrung 92 anordnen. Derartige Blasformmaschinen sind im Stand der Technik weitgehend bekannt und werden deshalb nicht weiter beschrieben.

Sie weisen, wie eingangs erwähnt, mehrere Prozessventile auf, die im Verlaufe des Blasprozesses zu unterschiedlichen Zeiten betätigt werden, um den Rohling mittels Blasluft in die gewünschte Form zu bringen. In dieser Ansicht sind zwei Prozessventile dargestellt. Sie umfassen jeweils mindestens ein Pilotventil 6 in Form eines Magnetventils sowie ein Hauptventil in Form eines pneumatischen Kolbenventils. Das Hauptventil wird in diesem Text als Ventil 2 bezeichnet.

Eine Steuervorrichtung 7 ist über Pilot-Ventilleitungen 71 in Form von Kabeln mit den Pilotventilen 6 verbunden. Die Steuervorrichtung 7 ist ferner mit einer Maschinensteuerung 8 verbunden, wie dies mittels der Steuerleitung 70 gezeigt ist. Vorzugsweise bildet die Steuervorrichtung 7 eine von der Maschinensteuerung 8 separate Einheit. Sie kann jedoch auch Teil der Maschinensteuerung 8 sein.

Die Prozessventile und insbesondere ihre Hauptventile können identisch sein und demselben Zweck dienen oder sie können unterschiedlich ausgebildet sein.

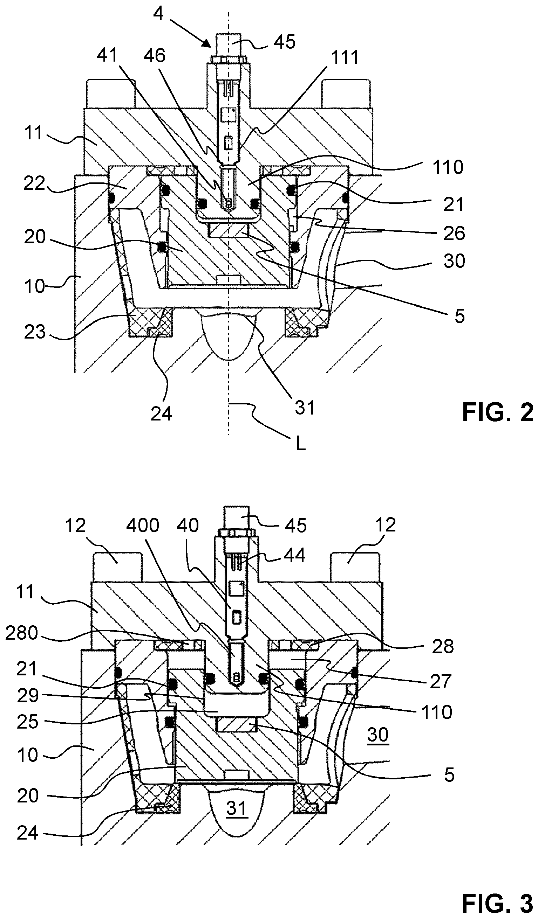

Erfindungsgemäss ist zu mindestens einem Ventil 2, vorzugsweise zu jedem Ventil 2, je eine Sensoreinheit 4 vorhanden. Die Sensoreinheit 4 ist in einem zweiten Gehäuseteil 11 angeordnet. Das zweite Gehäuseteil 11 bildet vorzugsweise einen Deckel für eine Aufnahmeöffnung des ersten Gehäuseteils 10, in der das Ventil 2 angeordnet ist. Am oder im zweiten Gehäuseteil 11 ist vorzugsweise auch das mindestens eine Pilotventil 6 angeordnet. Das zweite Gehäuseteil 11 lässt sich beispielsweise mittels Schrauben 12 am ersten Gehäuseteil 10 befestigen, wie dies in Figur 3 erkennbar ist.

In den Figuren 2 und 3 ist ein Ausführungsbeispiel eines erfindungsgemässen Ventils 2 dargestellt. Das Ventil 2 weist einen Kolben 20 auf, der in einer Ausnehmung, gebildet durch das erste und zweite Gehäuseteil 10, 11 bewegbar angeordnet ist. Hierzu ist am zweiten Gehäuseteil 11, welches einen Deckel bildet, eine Führungsschürze 22 befestigt, die den Kolben 20 am zweiten Gehäuseteil 11 bewegbar hält. Diverse Dichtungen 21 in Form von Dichtungsringen bilden eine Dichtung zwischen dem Kolben 20 und dem zweiten Gehäuseteil 11 bzw. der Führungsschürze 22. Mindestens eine weitere Dichtung 21 bildet eine Dichtung zwischen der Führungsschürze 22 und dem ersten Gehäuse 10. Die in den Figuren 2 und 3 als kleine schwarze Flächen dargestellten Elemente sind derartige Dichtungen 21, auch wenn nicht alle mit dem entsprechenden Bezugszeichen versehen sind.

Im ersten Gehäuseteil 10 ist ein Niederhalter 23 befestigt oder eingeklemmt, der eine umlaufende Sitzdichtung 24 in ihrer Position hält. Im geschlossenen Zustand drückt der Kolben 20 auf die Sitzdichtung 24 und verschliesst somit eine Leitung zwischen einer Prozessfluid-Eingangsöffnung 30 und einer Prozessfluid-Ausgangsöffnung 31, wie dies in Figur 3 erkennbar ist. Ein Anschlagring 28 mit einer kreisförmigen oder punktuellen Öffnung 280 dient als oberer Anschlag des Kolbens 20. Der hier dargestellte Kolben 20 weist eine zentrale Ausnehmung 29 auf, die auf der dem Prozessfluid-Ausgang entgegen gesetzten Seite des Kolbens ausgebildet ist.

In die Ausnehmung 29 des Kolbens 20 greift ein am zweiten Gehäuseteil 11 angeordneter Führungszapfen 110 ein. Zwischen dem Führungszapfen 110 und dem Boden der Ausnehmung 29 des Kolbens 20 ist eine kreisförmige Kammer 25 gebildet, die sich je nach Verschiebeposition des Kolbens 20 in ihrem Volumen ändert. Eine erste ringförmige Kammer 26 ist zwischen der Führungsschürze 22 und dem Kolben 20 ausgebildet, eine zweite ringförmige Kammer 27 ist zwischen dem Kolben 20 und dem zweiten Gehäuseteil 11 ausgebildet.

Der Kolben 20 weist Steuerflächen in Steuerräumen auf, damit er mittels eines Steuerdrucks geöffnet und geschlossen werden kann. Der Kolben 20 ist vorzugsweise bezüglich des Prozessfluids druckausgeglichen und wird somit vorzugsweise ausschliesslich mittels der Steuerdrücke betätigt. Die Steuerdrücke werden mittels des mindestens einen Pilotventils gesteuert. Derartige Ventile sind bekannt. Die kreisförmige Kammer 25 bildet einen ersten Steuerraum für einen ersten Steuerdruck und die ringförmige erste Kammer 26 bildet einen zweiten Steuerraum für einen zweiten Steuerdruck.

Die zweite ringförmige Kammer 27 ist eine Druckausgleichskammer, die mit dem Prozessfluid beaufschlagt wird.

In anderen Ausführungsformen ist die kreisförmige Kammer 25 die Druckausgleichskammer. Die erste ringförmige Kammer 26 bildet weiterhin den zweiten Steuerraum und die zweite ringförmige Kammer 27 bildet den ersten Steuerraum. Die Steuerleitungen und die Druckausgleichsleitung sind entsprechend an geeigneter Stelle angeordnet.

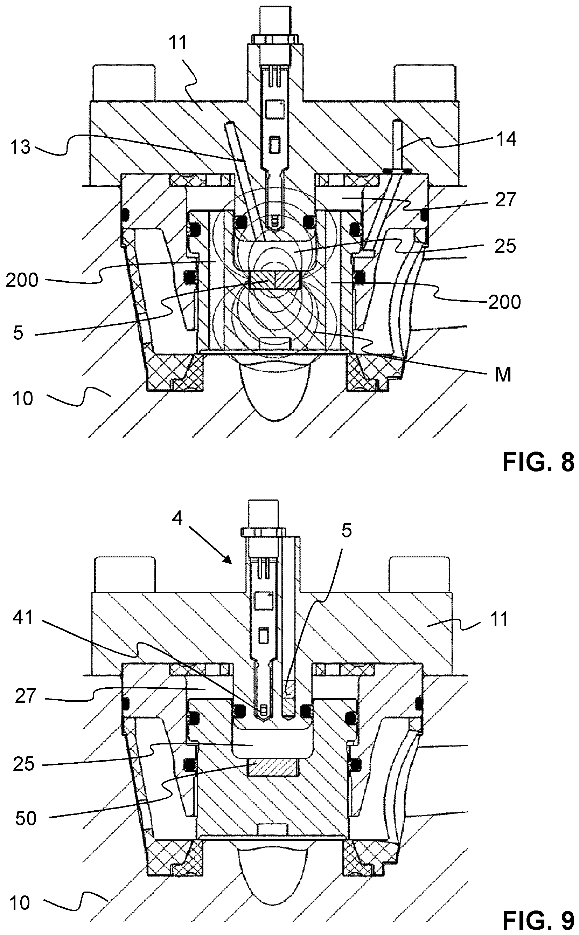

Die im ersten Ausführungsbeispiel verwendeten zugehörige erste Steuerleitung 13 und zugehörige zweite Steuerleitung 14 für das Steuerfluid, üblicherweise Steuerluft, sind in Figur 8 dargestellt. Die zugehörigen Druckausgleichsleitungen 200 zwischen der Prozessfluidkammer im Bereich zwischen Prozessfluid-Eingang und Prozessfluid-Ausgang und der Druckausgleichskammer 27 sind ebenfalls in Figur 8 erkennbar. Ein derartiges Ventil ist in der noch unveröffentlichten Europäischen Patentanmeldung 21 171 204.7 beschrieben.

Das hier beschriebene Ventil dient lediglich zur Veranschaulichung der erfinderischen Idee. Das Ventil 2 an sich, d.h. die Form des Kolbens 20, die Anordnungen der Dichtungen 21 und der Steuerräume sowie der Druckausgleichskammer können auch anders sein. Insbesondere können auch Ventile bekannter Art ohne Führungsschürze, Niederhalter und einem anders geformten Dichtungssitz verwendet werden. Auch kann das Ventil ein eigenes Gehäuse aufweisen, so dass nicht Teile des Ventilblocks hierzu verwendet werden.

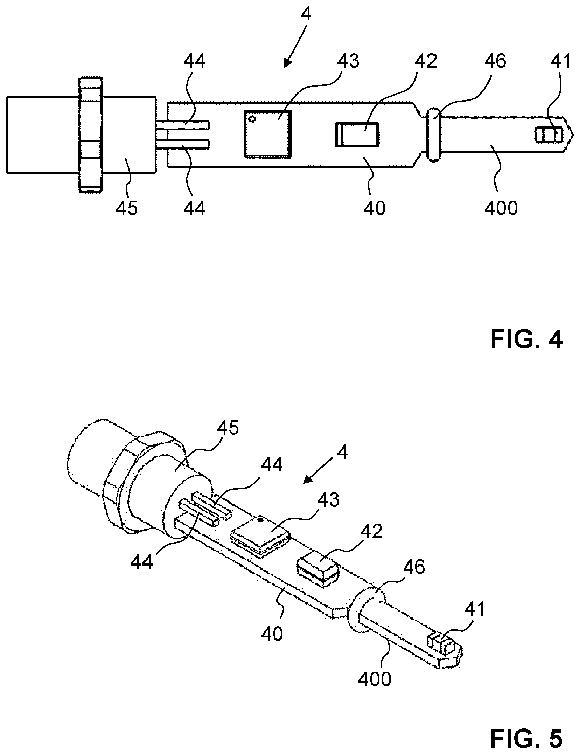

Erfindungsgemäss weist das Ventil 2 eine Sensoreinheit 4 auf. Die Sensoreinheit 4 ist vorzugsweise in einer länglichen Form ausgebildet. Sie ist in einer Aufnahmeöffnung 111 des zweiten Gehäuseteils 11 eingeführt und darin gehalten. Vorzugsweise erstreckt sich die Sensoreinheit 4 entlang einer Längsmittelachse L des Kolbens 20. In einem Endbereich 400 der Sensoreinheit 4 ist ein Magnetfeldsensor, hier ein Hall-Sensor 41, angeordnet, wie in den Figuren 4 und 5 erkennbar ist. Ein O-Ring 46, der den Endbereich 400 von einer vorzugsweise flachen Grundplatte 40 trennt, lagert die Sensoreinheit 4 im zweiten Gehäuseteil 11, wie dies in den Figuren 2 und 3 gut erkennbar ist. Anstelle des Hall-Sensors lässt sich ein anderer Magnetfeldsensor, beispielsweise ein magneto-resistiver Sensor, verwenden.

Das dem Kolben 20 zugewandte Ende der Aufnahmeöffnung 111 des zweiten Gehäuseteils 11 ist vorzugsweise geschlossen ausgebildet. In diesem Bespiel ist das Gehäuseteil 11 einteilig ausgebildet und weist somit in diesem Bereich eine Wandung auf. Dadurch ragt die Sensoreinheit nicht in die kreisförmige Kammer 25 hinein. Der Hall-Sensor 41 ist von einem Fluid in der kreisförmigen Kammer 25 und somit vom Steuerfluid getrennt. Der Hall-Sensor 41 ist dank der geschlossen ausgebildeten umlaufenden Seitenwand des Gehäuses 11 auch von der zweiten ringförmigen Kammer 27 und dessen Fluid, hier das Prozessfluid, getrennt.

An ihrem gegenüberliegenden Ende weist die Sensoreinheit 4 einen Stecker 45 auf, der mit einer Steckverbindung 44 auf die Grundplatte 40 gelötet ist. Der Stecker 45 ragt aus dem zweiten Gehäuseteil 11 heraus und dient einerseits als zweite Lagerung und andererseits zur Verbindung mit der oben erwähnten Steuervorrichtung 7. Die Sensoreinheit 4 ist vorzugsweise lösbar im zweiten Gehäuseteil 11 angeordnet. Vorzugsweise ist das zweite Gehäuseteil 11 lösbar mit dem ersten Gehäuseteil 10 verbunden. Vorzugsweise ist das zweite Gehäuseteil 11 gemeinsam mit dem Kolben 20 und der Führungsschürze 22 vom ersten Gehäuseteil 10 entfernbar.

Im Kolben 20 ist ein Magnet 5 angeordnet. Er ist vorzugsweise ein Permanentmagnet. Er befindet sich vorzugsweise in einer gemeinsamen Achse zur Sensoreinheit, wobei sich die Achse entlang der Bewegungsrichtung des Kolbens beim Schliessen und Öffnen des Ventils erstreckt. Vorzugsweise entspricht diese Achse der Längsmittelachse L. In diesem Beispiel ist der Magnet 5, insbesondere der Permanentmagnet, ein Stabmagnet. Die resultierenden Magnetfeldlinien M sind in Figur 8 gut erkennbar. Sie kreuzen die Sensoreinheit 4 und somit den Hall-Sensor 41 jeweils senkrecht.

Anstelle des Hall-Sensors 41 kann auch ein anderer Magnetfeldsensor in der oben beschriebenen Sensoreinheit und in den nachfolgend beschriebenen Sensoreinheiten angeordnet sein.

In alternativen Ausführungsformen befindet sich an der Stelle des Magneten 5 ein magnetisierbares Element 50 und im zweiten Gehäuseteil 11, vorzugsweise ebenfalls im Führungszapfen 110, ist der Magnet 5 angeordnet, insbesondere ein Permanentmagnet oder ein Elektromagnet. Das Gehäuseteil 11 weist vorzugsweise eine entsprechende Aufnahmebohrung auf, die von aussen zugänglich ist und gegenüber der kreisförmigen Kammer, hier dem ersten Steuerraum 25, geschlossen ausgebildet ist. Dies ist in Figur 9 dargestellt, wobei im dargestellten Beispiel der Magnet 5 ein stabförmiger oder plattenförmiger Permanentmagnet ist. An derselben Stelle oder an einer anderen Stelle liesse sich auch ein anderer Magnet, beispielsweise ein Elektromagnet, anordnen.

Wie in den Figuren 4 und 5 erkennbar ist, sind auf der Grundplatte 40 noch weitere Elemente angeordnet. Vorzugsweise ist ein Speicher 42 vorhanden, um Messwerte, jedoch auch Korrekturwerte lokal zu speichern. Vorzugsweise ist eine Elektronikeinheit 43 vorhanden, um den Magnetfeldsensor zu betreiben und die Messwerte an die Steuereinheit 7 weiterzuleiten. Der Magnetfeldsensor ist vorzugsweise ebenfalls ein Hall-Sensor oder einer der oben genannten Sensoren.

Die in den Figuren 4 und 5 dargestellte Sensoreinheit 4 ist vorzugsweise gehäuselos ausgebildet und wird in der dargestellten Form direkt in die Aufnahmeöffnung 111 des zweiten Gehäuseteils 11 gesteckt. D.h. das zweite Gehäuseteil 11 bildet das schützende Gehäuse für die Sensoreinheit 4.

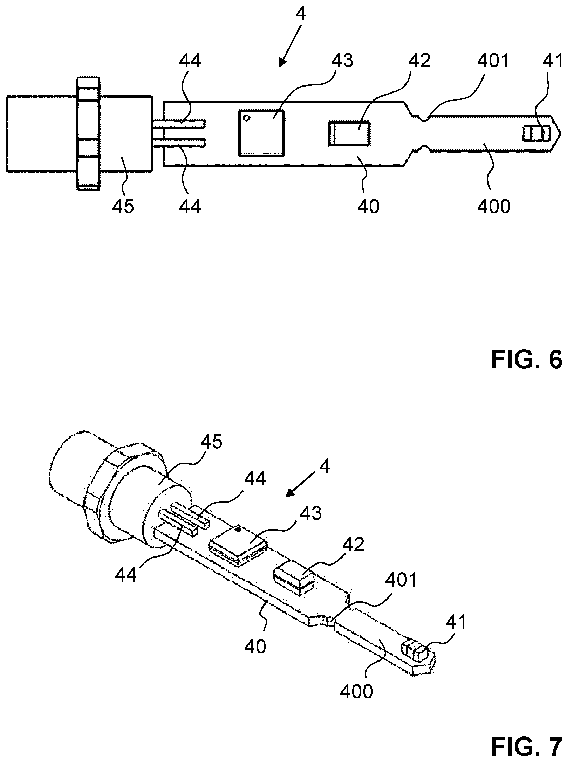

In den Figuren 6 und 7 ist die Sensoreinheit 4 ohne O-Ring an der Verjüngung 401 dargestellt. Sie lässt sich auch auf diese Art und Weise verwenden. Falls sie nicht wieder entfernbar sein soll, lässt sie sich zudem in der Aufnahmeöffnung 111 vergiessen oder auf andere Art und Weise fixieren.

Die erfindungsgemässe Ventileinheit ermöglicht eine genaue Überwachung des Kolbens und somit eine frühzeitige Erkennung einer Alterung.

**BEZUGSZEICHENLISTE**

| | | | |
|---|---|---|---|
| 10 | erstes Gehäuseteil | 40 | Grundplatte |
| 11 | zweites Gehäuseteil | 400 | Endbereich |
| 110 | Führungszapfen | 401 | Verjüngung |
| 111 | Aufnahmeöffnung | 41 | Hall-Sensor |
| 12 | Schrauben | 42 | Speicher |
| 13 | erste Steuerleitung | 43 | Elektronikeinheit |
| 14 | zweite Steuerleitung | 44 | Stecker-Verbindung |
| | | 45 | Stecker |
| 2 | Ventil | 46 | O-Ring |
| 20 | Kolben | | |
| 200 | Druckausgleichsleitung | 5 | Magnet |
| 21 | Dichtung | 50 | magnetisierbares Element |
| 22 | Führungsschürze | | |
| 23 | Niederhalter | 6 | Pilotventil |
| 24 | Sitzdichtung | | |
| 25 | ringförmige Kammer | 7 | Steuervorrichtung |
| 26 | ringförmige Kammer | 70 | Steuerleitung |
| 27 | kreisförmige Kammer | 71 | Pilotventil-Leitung |
| 28 | Anschlagring | 72 | Sensorleitung |
| 280 | Öffnung | | |
| 29 | Ausnehmung | 8 | Maschinensteuerung |
| 30 | Prozessfluid- | 90 | Streckvorrichtung |
| | Eingangsöffnung | 91 | Streckdorn |
| 31 | Prozessfluid-Ausgangsöffnung | 92 | Durchgangsbohrung |
| | | L | Längsmittelachse |
| 4 | Sensoreinheit | | |

## Patentansprüche

1. Ventileinheit
- mit einem Ventil, das einen bewegbaren Kolben (20) zum Schliessen und Öffnen des Ventils aufweist,
- mit einem Magnet (5) oder einem magnetisierbaren Element (50) und
- mit einer Sensoreinheit (4), die einen Magnetfeldsensor, vorzugsweise ein Hall-Sensor (41), zur Bestimmung einer Position des Kolbens (20) aufweist,
wobei der Magnet (5) oder das magnetisierbare Element (50) und die Sensoreinheit (4) durch die Bewegung des Kolbens (20) relativ zueinander bewegbar sind,
**dadurch gekennzeichnet,**
**dass** die Sensoreinheit (4) in einer Aufnahmeöffnung (111) der Ventileinheit angeordnet ist, die gegenüber einem Raum, in den der Kolben (20) während seiner Bewegung eindringt, geschlossen ausgebildet ist.

2. Ventileinheit nach Anspruch 1, wobei der Magnet (5) oder das magnetisierbare Element (50) im Kolben (20) angeordnet ist und die Sensoreinheit (4) ortsfest angeordnet ist.

3. Ventileinheit nach einem der Ansprüche 1 oder 2, wobei die Sensoreinheit (4) in einem Gehäuseteil der Ventileinheit angeordnet ist und wobei die Aufnahmeöffnung (111) zwecks Einführung der Sensoreinheit (4) zu einer Aussenseite hin offen ausgebildet ist.

4. Ventileinheit nach Anspruch 3, wobei der Kolben (20) lösbar und relativ zum Gehäuseteil beweglich am Gehäuseteil befestigt ist, wodurch das Gehäuseteil mit dem Kolben (20) und der Sensoreinheit (4) gemeinsam auswechselbar sind.

5. Ventileinheit nach einem der Ansprüche 3 oder 4, wobei das Gehäuseteil einen Führungszapfen (110) aufweist, welcher in eine Ausnehmung (29) des Kolbens (20) ragt und wobei der Magnetfeldsensor im Führungszapfen (110) angeordnet ist.

6. Ventileinheit nach einem der Ansprüche 1 bis 5, wobei der Magnetfeldsensor und der Magnet (5) oder das magnetisierbare Element (50) entlang einer gemeinsamen Achse beabstandet zueinander angeordnet sind, wobei sich die gemeinsame Achse entlang der Bewegungsrichtung des Kolbens (20) beim Öffnen und Schliessen des Ventils erstreckt.

7. Ventileinheit nach Anspruch 6, wobei die Aufnahmeöffnung (111) eine Längsrichtung aufweist, die sich entlang der gemeinsamen Achse erstreckt.

8. Ventileinheit nach einem der Ansprüche 1 bis 7, wobei der Magnetfeldsensor ein 2D-Sensor ist, vorzugsweise ein 3D-Sensor.

9. Ventileinheit nach einem der Ansprüche 1 bis 8, wobei die Sensoreinheit (4) gehäuselos in der Aufnahmeöffnung (111) angeordnet ist, wobei das Gehäuseteil die Sensoreinheit (4) schützend umgibt.

10. Ventileinheit nach einem der Ansprüche 1 bis 9, wobei die Sensoreinheit (4) eine längliche Grundplatte (40) aufweist, wobei in einem Endbereich (400) der Grundplatte (40) der Magnetfeldsensor angeordnet ist und wobei die Grundplatte (40) in der Aufnahmeöffnung (111) aufgenommen ist.

11. Ventileinheit nach Anspruch 10, wobei an einem dem Endbereich (400) gegenüberliegenden Ende ein Stecker (45) fest mit der Grundplatte (40) verbunden ist, wobei der Stecker (45) im montierten Zustand der Grundplatte (40) in der Aufnahmeöffnung (111) von aussen zugänglich ist.

12. Ventileinheit nach einem der Ansprüche 1 bis 11, wobei die Sensoreinheit (4) einen O-Ring (46) aufweist, mittels dem sie in der Aufnahmeöffnung (111) gelagert ist.

13. Ventileinheit nach einem der Ansprüche 1 bis 12, wobei der Kolben (20) einen kreiszylinderförmigen Grundkörper aufweist, der eine Längsmittelachse (L) definiert, wobei die gemeinsame Achse die Längsmittelachse (L) des Kolbens (20) ist und wobei der Magnetfeldsensor und der Magnet (5) oder das magnetisierbare Element (50) zentrisch zur Längsmittelachse (L) angeordnet sind.

14. Ventileinheit mit einem Ventil nach einem der Ansprüche 1 bis 13, wobei die Ventileinheit eine Steuervorrichtung (7) aufweist, welche Positionen des Kolbens (20) kontinuierlich auswertet, wobei die Steuervorrichtung (7) ausgebildet ist, um zusätzlich zu einem geschlossenen und einem offenen Zustand des Ventils weitere Positionen während einer Bewegung des Kolbens (20) auszuwerten.

15. Ventileinheit
- mit einem Ventil, das einen bewegbaren Kolben (20) zum Schliessen und Öffnen des Ventils aufweist,
- mit einem Magneten (5) oder einem magnetisierbaren Element (50) und
- mit einer Sensoreinheit (4), die einen Magnetfeldsensor, vorzugsweise einen Hall-Sensor (41), zur Bestimmung einer Position des Kolbens (20) aufweist,
wobei der Magnet (5) oder das magnetisierbare Element (50) und die Sensoreinheit (4) durch die Bewegung des Kolbens (20) relativ zueinander bewegbar sind,
**dadurch gekennzeichnet,**
**dass** die Sensoreinheit (4) gehäuselos in einer Aufnahmeöffnung (111) der Ventileinheit angeordnet ist, wobei die Aufnahmeöffnung (111) die Sensoreinheit (4) schützend umgibt.

16. Ventileinheit
- mit einem Ventil, das einen bewegbaren Kolben (20) zum Schliessen und Öffnen des Ventils aufweist,
- mit einem Magneten (5) oder einem magnetisierbaren Element (50) und
- mit einer Sensoreinheit (4), die einen Magnetfeldsensor, vorzugsweise einen Hall-Sensor (41), zur Bestimmung einer Position des Kolbens (20) aufweist,
wobei der Magnet (5) oder das magnetisierbare Element (50) und die Sensoreinheit (4) durch die Bewegung des Kolbens (20) relativ zueinander bewegbar sind,
**dadurch gekennzeichnet,**
**dass** der Magnetfeldsensor ein 3D Sensor mit lateralen und vertikalen Sensor-Elementen zur Messung eines dreidimensionalen Vektors einer magnetischen Flussdichte ist.

17. Ventileinheit
- mit einem Ventil, das einen bewegbaren Kolben (20) zum Schliessen und Öffnen des Ventils aufweist,
- mit einem Magneten (5) oder einem magnetisierbaren Element (50) und
- mit einer Sensoreinheit (4), die einen Magnetfeldsensor, vorzugsweise einen Hall-Sensor (41), zur Bestimmung einer Position des Kolbens (20) aufweist,
wobei der Magnet (5) oder das magnetisierbare Element (50) und die Sensoreinheit (4) durch die Bewegung des Kolbens (20) relativ zueinander bewegbar sind,
**dadurch gekennzeichnet,**
**dass** die Ventileinheit eine Steuervorrichtung (7) aufweist, welche Positionen des Kolbens (20) kontinuierlich auswertet, wobei die Steuervorrichtung (7) ausgebildet ist, um zusätzlich zu einem geschlossenen und einem offenen Zustand des Ventils weitere Positionen während einer Bewegung des Kolbens (20) auszuwerten.
